# EUROPEAN PATENT APPLICATION

(11) **EP 0 943 743 A1**
(43) Date of publication of application: **22.09.1999**
(21) Application number: 99660002.9
(22) Date of filing: 08.01.1999
(51) Int. Cl.: E04C 2/296

(54) **Construction element**

(30) Priority: 19.03.1998 FI 980613
(71) Applicant: Muovilami Oy, FIN-63700 Ähtäri (FI)
(72) Inventor: Aho, Esko, 63700 Ähtäri (FI)
(74) Representative: Risku, Ira Marjatta

(57) **Abstract**

The invention concerns an antiseptic construction element, which is composed of a core (1), of an envelope (2) and on its surface, of a coating (3), which contains a bactericide. The invention also concerns a method for preparing such a construction element.

## Description

The invention concerns a construction element, such as a door, a table or wall element, which has been coated with an antiseptic coating to prevent growth of bacteria, fungi or moulds on the surface of the construction element.

In various clean spaces, such as humid and hygienic spaces, aseptic spaces, cold rooms, hospitals, swimming halls, spas and in the pharmaceutical or electronic industries construction elements and surfaces are needed that are hygienic and easy to keep clean.

In the following the invention is described mainly as adapted to a door, since generally the same properties apply to other construction elements as to a door.

The problem with doors situated in hygienic spaces, such as for exemple with a door made from reinforced plastic, often is the formation of bacterial and fungal growth on the door surface, especially if the humidity level in the room is sufficient for the growth of microorganisms. Therefore the surface of the door has to be cleaned repeatedly and regularly with various cleansing and desinfecting agents, which causes wear of the surface and requires recollection and labour.

In general in spaces, where bacteria, fungi or moulds form a major nuisance, wood laminate or metal doors are used. However, metal doors are heavy and damage easily. Moreover, metal doors are not structurally completely tight, so that humidity and bacteria may get inside them. Also doors made of wood laminate are very heavy. Moreover the wood, as an organic material, "lives" according to changes in humidity and forms a good basis for growth of various microorganisms. Also doors and elements made of reinforced plastic are generally in use, and methods for making them are well known. Glass fiber reinforced polyester plate as the envelope material and some porous material, such as polyurethane, as the core material, which gives the element the necessary rigidity, are often used as manufacturing material for doors and other construction elements made of reinforced plastic.

The present invention strives to accomplish a construction element, which is light, hygienic as a structure and on the surface of which microorganisms essentially cannot proliferate. Moreover, the present invention puts forward a method for producing such a construction element. This has been accomplished as is presented in the characterizing parts of the appended claims 1 and 5.

The problem posed by growth of various microorganisms on door and other construction element surfaces is thus solved by the present invention by preventing the growth of microorganisms. According to the invention, this is accomplished by coating the construction element with an antiseptic coating material, especially with a bactericide protected plastic material. Several bactericide protected plastic materials are known, all of which may be used as the coating material according to the invention with the proviso that they form a surface, which is hard and smooth enough. Hardness is important in order that the surface does not damage easily when hit and the smoothness in order that the circumstances for microbial growth are as disadvantageous as possible. Even other materials besides the plastics may be used as the coating, such as various paints, varnishes etc.

The preferred coating material used in the invention is a gelatinous coating, such as the so called gelcoat. Gelcoat is a polymeric coating (an unsaturated polyester), which is used for example to coat boats, bath tubs, wall panels and trailers. Gelcoat gives the product an easy-care and wear resistant surface. According to the invention, an antiseptic agent is added to the gelcoat coating, which blends to the molecular structure of the polymere, thereby preventing growth of microorganisms in and on the coating. Because the antiseptic agent blends to the product, it is part of the latter and does not dissolve in water to be washed away, nor does it wear out of the product.

As an antiseptic agent any known antiseptic agent may be used; a suitable agent is for exemple the agent known by the tradename Microban.

According to the invention, the antiseptic coating material may be used to coat any construction, such as a table, or as a door composed of reinforced plastic. The door element made of reinforced plastic will not warp and is light, tough and shock resistant. Moreover the door, which is coated with an antiseptic coating material also becomes preventive of microbial growth.

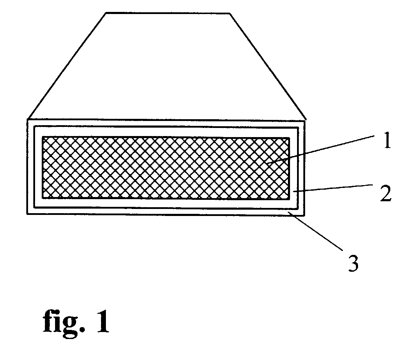

In the following the invention is described more in detail with reference to the Figure, whereby in figure 1 the cross section of an element construction made of reinforced plastic according to the invention is presented.

In figure 1 a sandwich type door construction is presented, where the core 1 is surrounded by a laminate surface made of reinforced plastic 2, the thickness of which is about 2-5 mm, preferably about 2,5 mm. In the core 1 for example polyurethane free of freon compounds may be used. The reinforced plastic layer 2 surrounds seamlessly also the door edges, whereby the door plate becomes tight, and its surface resistant to water or humidity. For example glass fiber reinforced polyester may be used as the reinforced plastic layer.

The surface of the element is coated with a hard and smooth layer of an antiseptic gelatinous coating 3, preferably gelcoat, the thickness of which is about 0,1 - 1 mm, preferably about 0,5 mm. Also other suitable coating materials, such as paints or varnishes, may be used. A suitable antiseptic agent is for example the agent known by the tradename Microban, which is added to the coating used, whereby it forms a so called internal bacterial protection.

The door construction according to the invention can be made for example the following way. To both halves of the door mold is sprayed a gelcoat coating made of unsaturated polyester, which has been treated with a bactericide (Microban), and which is cured with 1,5 % MEK-peroxyde (methyl ethyl ketone peroxyde). As soon as the antibacterial gelcoat coating has cured to sticky dryness, the actual lamination of the door takes place as follows:

To both halves of the door mold is placed a glass fiber mat layer and some unsaturated polyester, to which about 2 % of curing agent has been added. Glass fiber mat layers are placed in the halves of the door mold in any chosen number.

Thereafter to the other half of the door mold, on the glass fiber-polyester layer is placed the core material of the door, to which has preferably beforehand been mounted the fixing devices needed for equipment, such as hinges and locks. The mold halves are pressed together and taken to a plane press, in which the pressing force is raised in about 10-20 second, preferably in about 15 second intervals to about 60-80 tons, preferably to about 70 tons. After the polyester has cured and hardened the mold is taken out of the press and opened. The finished door preform is flashed and undergoes a finishing treatment and is equipped with hinges, locks etc. equipment.

## Claims

1. An antiseptic construction element, **characterized** in that the element is composed of a core (1), envelope (2) and on its surface, of a gelcoating (3), which contains an antiseptic agent.

2. The construction element according to Claim 1, **characterized** in that the envelope (2) comprises glass fiber reinforced polyester.

3. The construction element according to Claim 1, **characterized** in that the core (2) comprises polyurethane.

4. A method for preparing a construction element according to Claim 1, **characterized** in that an antiseptic agent is blended to the gelcoating, and the mixture is sprayed to both halves of the door mold and cured, in each half of the door mold is placed at least one glass fiber mat layer and some unsaturated polyester, to which a curing agent has been added, in the other half of the door mold, on the glass fiber-polyester layer is placed the core material of the door, and the mold halves are pressed together and taken to a plane press, where the pressing force is raised in about 10-20 second intervals to about 60-80 tons, the mold is taken out of the press, it is opened and the finished door preform undergoes a finishing treatment.

5. The method according to Claim 4, **characterized** in that the core comprises polyurethane.
